# FASCICULE DE BREVET EUROPEEN

(11) **EP 0 469 502 B1**
(45) Date de publication et mention de la délivrance du brevet: **14.09.1994**
(21) Numéro de dépôt: 91112692.8
(22) Date de dépôt: 29.07.1991
(51) Int. Cl.: H02G 15/14, G02B 6/44

(54) **Dispositif rupteur mécanique pour câble d'accès à un boîtier d'équipements immergé**
Mechanische Brecheinrichtung für Zugangskabel zu einem Unterwassergehäuse von Einrichtungen
Mechanical breaking device for an access cable to an immersed equipment housing

(30) Priorité: 31.07.1990 FR 9009756
(43) Date de publication de la demande: 05.02.1992
(73) Titulaire: ALCATEL CIT, 75008 Paris (FR)
(72) Inventeur: Cachot, Jacques, F-91240 Saint Michel sur Orge (FR); Pelet, André, F-78310 Maurepas (FR); Crespo-Ruiz, François, F-75013 Paris (FR)
(74) Mandataire: Weinmiller, Jürgen

(56) Documents cités:
- GB-A- 2 197 287

## Description

La présente invention est relative aux liaisons de transmission par câble munies de boîtiers d'équipements immergés, et plus particulièrement au raccordement entre un tel boîtier et un câble d'entrée. L'invention s'applique en particulier aux liaisons de transmission par câble à fibres optiques équipé de répéteurs sous-marins.

Dans les répéteurs sous-marins d'une liaison de transmission par câble à fibres optiques, les câbles d'accès au répéteur sont constitués d'un tube métallique, gainé de matière isolante, contenant les fibres optiques. Le répéteur est muni de deux câbles d'accès, un à chaque extrémité; dans la suite, nous ne nous attacherons à décrire que les éléments associés à l'une des extrémités du répéteur, étant entendu que les mêmes éléments se retrouvent à l'identique à l'autre extrémité.

Un tel raccordement a été décrit dans le brevet français n° 2606943. On sait que le câble d'accès est muni d'un dispositif d'étanchéité qui assure l'étanchéité longitudinale en cas de rupture du câble, ce qui évite la pénétration d'eau à l'intérieur du répéteur et sa destruction; ce dispositif n'est efficace que si, en cas de traction accidentelle sur le câble d'accès, celui-ci se rompt en un point situé en amont du dispositif d'étanchéité par rapport au répéteur, et non entre le dispositif d'étanchéité et le répéteur.

C'est la raison pour laquelle on a prévu, comme il est décrit dans le brevet français précité, un fusible mécanique qui, en cas d'effort supérieur à une valeur donnée, entraîne la rupture du câble en amont du dispositif d'étanchéité longitudinale.

Ce fusible est constitué d'une douille emmanchée et fixée à une extrémité du tube comportant les fibres optiques du câble d'accès, d'une bague solidaire d'une tête de câble et emboîtée sur la douille et d'un jeu de goupilles assemblant transversalement la bague et la douille. Sous l'effet d'une traction supérieure à la valeur donnée, la douille est éjectée de la paroi de la tête de câble, ce qui entraîne la rupture des fibres en amont du dispositif d'étanchéité, dans le tube ou dans la tête de câble.

Les câbles d'accès, dont le tube métallique est obtenu par étirement, présentent une dispersion importante de leur valeur de résistance à la traction. Afin de conserver son efficacité quel que soit le câble d'accès utilisé, le fusible mécanique est prévu pour interrompre la liaison à partir d'une valeur de traction inférieure à la tolérance minimale pouvant être acceptée pour un câble et concernant sa résistance à la traction, ceci pour un tube de dimensions transversales données.

Les caractéristiques à prendre en compte pour le rôle qui lui est attribué rendent le fusible, de par sa constitution, relativement fragile; son montage au cours des opérations de fabrication des répéteurs l'expose à une rupture accidentelle. Ce risque s'accroît lorsque le diamètre extérieur du tube du câble d'accès diminue, pour un diamètre intérieur sensiblement identique, comme on le trouve dans les liaisons les plus récentes; en effet, pour garder son efficacité, l'adaptation du fusible à ces nouvelles dispositions demanderait une augmentation de sa sensibilité, et donc une diminution de la résistance des goupilles, ce qui le rendrait trop fragile et mal adapté au cycle de préparation des boîtiers d'équipements à immerger.

Un but de la présente invention est de réaliser un raccordement qui ne présente aucun risque de rupture accidentelle pendant les opérations de montage en usine, quelles que soient les caractéristiques, de résistance à la traction, du tube du câble utilisé.

Un autre but de l'invention est de réaliser un raccordement qui assure à coup sûr une rupture du câble d'accès et de toutes les fibres optiques qu'il contient, en amont du dispositif d'étanchéité longitudinale, lorsque une traction supérieure à une valeur prédéterminée est exercée sur ce câble.

L'invention a pour objet un dispositif rupteur mécanique pour câble d'accès à un boîtier d'équipements immergé d'une liaison de transmission par câble, ledit câble d'accès comportant un tube renfermant des éléments acheminant la transmission et étant équipé d'un dispositif d'étanchéité longitudinale, caractérisé en ce qu'il comprend des moyens pour, en cas de traction sur le câble exercée du côté amont par rapport au boîtier d'équipements, immobiliser une portion du câble en amont du dispositif d'étanchéité et exercer un écrasement du tube.

Avantageusement, lesdits moyens d'immobilisation d'une portion dudit câble comprennent une surépaisseur de celui-ci coopérant avec au moins une bride de fixation, les moyens pour exercer un écrasement du tube étant constitués par ladite bride de fixation.

La surépaisseur est réalisée de préférence par surmoulage d'une matière plastique autour d'une portion du câble.

De préférence, le dispositif comporte deux brides de fixation encadrant la surépaisseur et disposées sur un disque fixe par rapport au boîtier d'équipements et coaxial à celui-ci.

La surépaisseur a la forme d'un cylindre dont l'axe est orienté perpendiculairement à l'axe du boîtier d'équipements.

La surépaisseur est disposée dans une cavité semi-cylindrique du disque.

Le dispositif d'étanchéité longitudinale est fixé sur ledit disque.

Le disque est fixé à une carcasse extérieure du boîtier d'équipements au moyen de vis radiales.

L'invention sera bien comprise à la lumière de la description donnée ci-après d'un exemple de réalisation de l'invention, dans le cadre d'une application à un répéteur sous-marin d'un liaison de transmission par câble à fibres optiques, en référence au dessin annexé dans lequel:
- la figure 1 montre un répéteur sous-marin vu en élévation partiellement coupé et représenté en deux moitiés pour des raisons de commodité,
- la figure 2 est une vue agrandie d'une partie de la figure 1,
- la figure 3 est une vue en perspective du disque support du dispositif rupteur mécanique du câble d'accès.

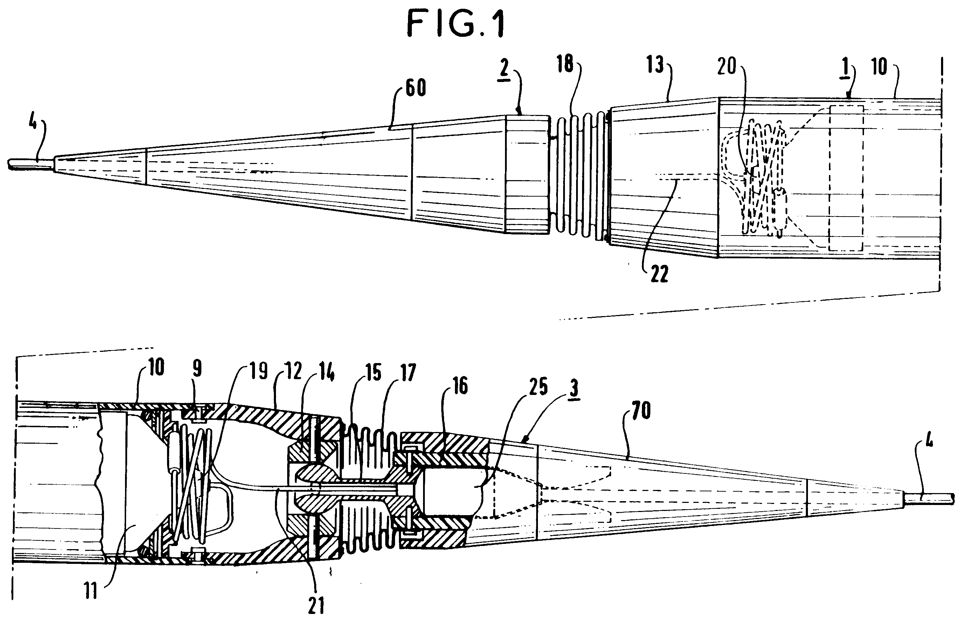

Comme on peut le voir dans la figure 1, un répéteur sous-marin d'une liaison de transmission par câble à libres optiques a la forme générale d'un fût cylindrique 1 prolongé à ses deux extrémités par des éléments de raccordement 2, 3 avec le câble de ligne 4, de forme générale conique.

Dans la version représentée, le fût cylindrique comporte une carcasse extérieure 10 en composite fibre-résine par exemple verre-résine époxyde recouvrant un caisson métallique 11 très rigide et gainé de polyéthylène qui renferme les équipements internes du répéteur.

La carcasse extérieure 10, très résistante aux efforts de traction, est prolongée par des manchons 12, 13, fixés par des vis 9. A l'intérieur de chaque manchon, est disposé un système articulé 14 comprenant un bras oscillant axial 15 se vissant sur un élément d'ancrage 16 solidaire de l'élément de raccordement. Le bras oscillant 15 est logé dans un soufflet 17, 18 qui relie les manchons 12, 13 et des enveloppes coniques 60, 70 des éléments de raccordement 2, 3

Le caisson métallique, étanche et très rigide, isole les équipements internes du répéteur de l'eau de mer. Il est pourvu de chaque côté, d'une traversée étanche 19, 20 permettant à une amorce de câble 21, 22 de relier ses équipements internes aux têtes de câble de ligne aboutissant dans les éléments de raccordement 2, 3.

La liaison entre le câble de ligne 4 et les amorces de câble 21, 22 est effectuée dans des boîtes d'épissurage telle que 25, disposées à l'intérieur des éléments d'ancrage 16. Les boîtes d'épissurage servent également de boîte à mou.

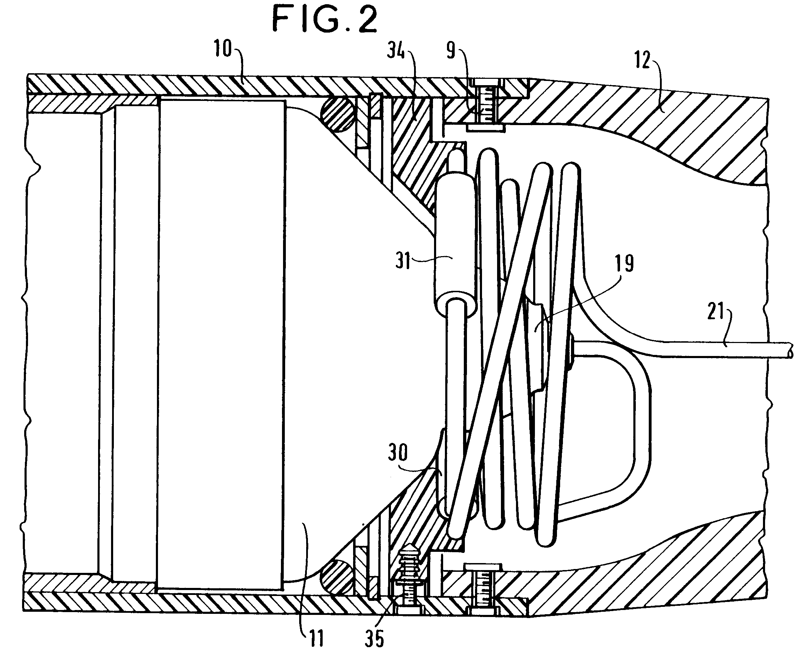

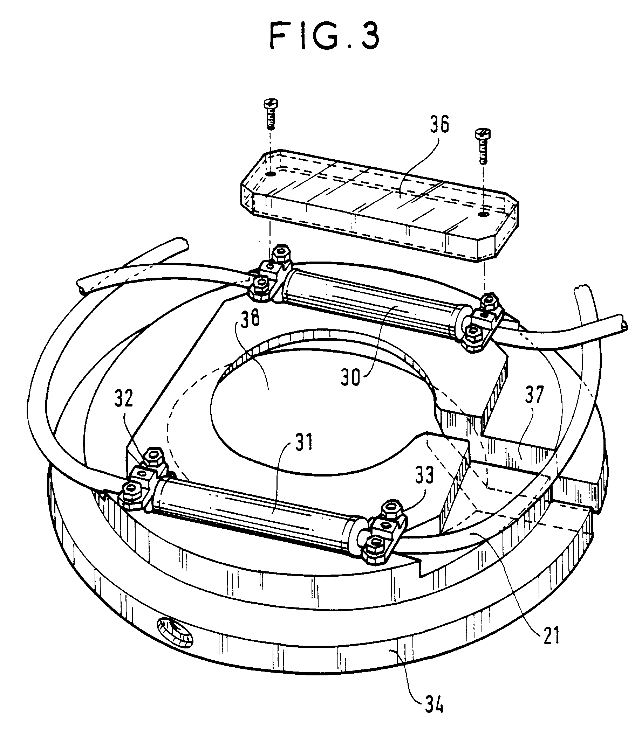

L'amorce de câble 21, 22 est munie de moyens pour assurer l'étanchéité longitudinale entre le câble et l'intérieur du répéteur; de tels moyens sont par exemple décrits dans le brevet français n° 2595149; comme ils sortent de la présente invention, ils ne seront pas décrit ici et on renvoie le lecteur pour plus de détails à la lecture du brevet précité; on note simplement que le dispositif d'étanchéité apparaît sous la forme d'une surépaisseur cylindrique sur l'amorce de câble, référencée 30 dans les figures 2 et 3. Ce dispositif d'étanchéité est placé aussi près que possible de la sortie de la traversée étanche 19, 20.

Conformément à l'invention, l'amorce de câble 21, 22 est munie de moyens pour qu'en cas de traction exercée sur l'amorce de câble, cette amorce se rompe en amont du dispositif d'étanchéité. Selon un exemple de réalisation, illustré plus précisément dans les figures 2 et 3 pour l'amorce 21, l'amorce de câble est immobilisée au niveau d'une surépaisseur 31 encadrée par deux brides de fixation 32 et 33. Ces brides sont fixées à un disque 34, en matériau résistant à la corrosion, du même type par exemple que celui qui constitue la carcasse 10. Le disque 34, qui présente un trou central 38, est disposé coaxialement au répéteur, sensiblement au niveau de la traversée étanche 19 qui le traverse par le trou 38. Le disque est fixé par des vis radiales 35 à la carcasse 10.

La surépaisseur est réalisée par surmoulage autour d'une portion de l'amorce de câble d'une matière plastique et on lui donne de préférence une forme cylindrique. Elle peut ainsi être positionnée dans une cavité semi-cylindrique pratiquée dans une face du disque 34, de telle sorte que cette cavité soit orientée de manière perpendiculaire à l'axe du répéteur, qui est la direction des éventuelles forces de traction exercées.

Le disque 34 présente en outre avantageusement une fente radiale 37 débouchant dans le trou 38 et de préférence située parallèlement à la cavité semi-cylindrique, cette fente 37 ayant pour rôle de faciliter lors de la mise en place de l'amorce de câble 21, le passage de celle-ci.

On notera que l'amorce de câble 21 présente, entre la surépaisseur 31 et la boîte d'épissurage 25, un certain nombre de replis ou spires, de manière à donner de la souplesse au niveau du système articulé 14 (figure 1).

En cas de traction exercée sur l'amorce de câble, du fait d'une traction sur le câble de ligne et donc du côté amont par rapport au répéteur, l'amorce du câble se tend et s'allonge; les fibres optiques lovées dans la boîte à mou se délovent légèrement en fournissant le mou nécessaire pour compenser l'allongement du tube métallique du câble avant sa rupture; la traction se poursuivant, selon une direction à 90 degrés environ du plan du disque 34, l'amorce se plie au droit de la bride 33 et s'écrase contre celle-ci, ce qui provoque l'écrasement du tube puis, à cet endroit, sa rupture et celle des fibres qu'il contient.

Le dispositif d'étanchéité peut avantageusement être fixé sur le disque 34, de la même manière que la surépaisseur 31, parallèlement à cette dernière.

Un couvercle 36 en plastique peut protéger le dispositif d'étanchéité 30; il est fixé par exemple par des pattes élastiques s'engageant dans des trous du disque ou, comme représenté dans la figure 3, par des vis en matière plastique mises en place dans des trous taraudés aménagés dans les brides. Un couvercle analogue, non représenté, peut protéger la surépaisseur 31.

L'invention s'applique à la réalisation de tout raccordement entre un câble d'accès et un boîtier d'équipements électriques, optoélectroniques ou autres, immergé, en particulier lorsque le câble est de faible diamètre.

## Revendications

1. Dispositif rupteur mécanique pour câble d'accès (21) à un boîtier d'équipements (11) immergé d'une liaison de transmission par câble, ledit câble d'accès comportant un tube renfermant des éléments acheminant la transmission et étant équipé d'un dispositif d'étanchéité longitudinale, caractérisé en ce qu'il comprend des moyens (31, 33) pour, en cas de traction sur le câble exercée du côté amont par rapport au boîtier d'équipements (1), immobiliser une portion du câble en amont du dispositif d'étanchéité et exercer un écrasement du tube.

2. Dispositif selon la revendication 1, caractérisé en ce que lesdits moyens d'immobilisation d'une portion dudit câble comprennent une surépaisseur (31) de celui-ci coopérant avec au moins une bride de fixation (33), les moyens pour exercer un écrasement du tube étant constitués par ladite bride de fixation.

3. Dispositif selon la revendication 2, caractérisé en ce que la surépaisseur est réalisée par surmoulage d'une matière plastique autour d'une portion du câble.

4. Dispositif selon l'une des revendications 2 et 3, caractérisé en ce qu'il comporte deux brides de fixation (32, 33) encadrant la surépaisseur et disposées sur un disque (34) fixe par rapport au boîtier d'équipements (11) et coaxial à celui-ci.

5. Dispositif selon la revendications 4, caractérisé en ce que la surépaisseur a la forme d'un cylindre dont l'axe est orienté perpendiculairement à l'axe du boîtier d'équipements.

6. Dispositif selon la revendication 5, caractérisé en ce que la surépaisseur (31) est disposée dans une cavité semi-cylindrique du disque (34).

7. Dispositif selon l'une des revendications 4 à 6, caractérisé en ce que le dispositif d'étanchéité longitudinale est fixé sur ledit disque.

8. Dispositif selon l'une des revendications 4 à 7, caractérisé en ce que le disque (34) est fixé à une carcasse extérieure (10) du boîtier d'équipements au moyen de vis radiales (35).

## Patentansprüche

1. Mechanische Sollbruchvorrichtung für ein Zugangskabel (21), das in ein Unterwassergerätegehäuse (11) führt, wobei dieses Zugangskabel ein die signalübertragenden Elemente umhüllendes Rohr besitzt und eine Dichtvorrichtung in Längsrichtung besitzt, dadurch gekennzeichnet, daß sie Mittel (31, 33) besitzt, um bei Anwendung einer Zugkraft am Kabel von außerhalb des Gerätegehäuses (11) einen Teil des Kabels vor der Dichtvorrichtung zu blockieren und das Rohr zu quetschen.

2. Vorrichtung nach Anspruch 1, dadurch gekennzeichnet, daß die Mittel zum Blockieren eines Teils des Kabels eine Überdicke (31) des Kabels enthalten, die mit mindestens einem Befestigungsflansch (33) zusammenwirkt, wobei die Mittel zum Quetschen des Rohrs aus dem Befestigungsflansch bestehen.

3. Vorrichtung nach Anspruch 2, dadurch gekennzeichnet, daß die Überdicke durch Überformen eines Teils des Kabels mit Kunststoff erzielt wird.

4. Vorrichtung nach einem der Ansprüche 2 oder 3, dadurch gekennzeichnet, daß sie zwei Befestigungsflansche (32, 33) aufweist, die zu beiden Seiten der Überdicke liegen und auf einer bezüglich des Gerätegehäuses (11) festen und dazu koaxialen Scheibe (34) angeordnet sind.

5. Vorrichtung nach Anspruch 4, dadurch gekennzeichnet, daß die Überdicke zylinderförmig ist und ihre Achse senkrecht zur Achse des Gerätegehäuses verläuft.

6. Vorrichtung nach Anspruch 5, dadurch gekennzeichnet, daß die Überdicke (31) in einer halbzylindrischen Vertiefung der Scheibe (34) untergebracht ist.

7. Vorrichtung nach einem der Ansprüche 4 bis 6, dadurch gekennzeichnet, daß die Längs-Dichtvorrichtung auf der Scheibe befestigt ist.

8. Vorrichtung nach einem der Ansprüche 4 bis 7, dadurch gekennzeichnet, daß die Scheibe (34) an einer äußeren Hülle (10) des Gerätegehäuses mit Hilfe von radialen Schrauben (35) befestigt ist.

## Claims

1. A mechanical fuse device for an access cable (4) to a submerged equipment housing (1) in a cable transmission link, said access cable including a tube enclosing items that provide transmission and being equipped with a longitudinal sealing device, the mechanical fuse device being characterized in that it comprises means (31, 33) for responding to traction exerted on the cable upstream relative to the equipment housing (1) by retaining a portion of the cable upstream from the sealing device and exerting a crushing effect on the tube.

2. A device according to claim 1, characterized in that said means for retaining a portion of said cable comprise a thickening (31) thereof co-operating with at least one fixing clamp (33), with the means for exerting a crushing effect on the tube being constituted by said fixing clamp.

3. A device according to claim 2, characterized in that the thickening is made by molding plastic around a portion of the cable.

4. A device according to claim 2 or 3, characterized in that it includes two fixing clamps (32, 33), one at each end of the thickening, the clamps being disposed on a disk (34) which is fixed relative to the equipment housing (1) and which is disposed on the same axis.

5. A device according to claim 4, characterized in that the thickening is in the form of a cylinder whose axis extends perpendicularly to the axis of the equipment housing.

6. A device according to claim 5, characterized in that the thickening (31) is disposed in a semicylindrical cavity of the disk (34).

7. A device according to any one of claims 4 to 6, characterized in that the longitudinal sealing device is fixed to said disk.

8. A device according to any one of claims 4 to 7, characterized in that the disk (34) is fixed to an outer shell (10) of the equipment housing by means of radial screws (35).
